# EUROPEAN PATENT APPLICATION

(11) **EP 1 967 065 A1**
(43) Date of publication of application: **10.09.2008**
(21) Application number: 08004216.1
(22) Date of filing: 07.03.2008
(51) Int. Cl.: A01K 87/00

(54) **Fishing rod, method for bringing into the use position thereof**

(30) Priority: 09.03.2007 NL 1033525
(71) Applicant: Shimano Europe Fishing Holding, 8071 CT Nunspeet (NL)
(72) Inventor: Zanetta, Pierangelo, 20143 Milano (IT); Piters, Jean André, 8253 DB Dronten (NL)
(74) Representative: Klooster, Jan Hanri

(57) **Abstract**

The invention relates to a fishing rod (1) comprising one or more hollow fishing rod tubes (2); Inside which an elastic thread (3) is inserted, and attached to a line connector (4) with fishing line (6). The outside wall (7) of the fishing rod (1) has two openings (8) for guiding through the elastic thread (3), and attachment means (9) for fixing the elastic thread (3), whereby in use during fishing, the elastic thread (3) is pre-tensioned between the attachment means (9) and the line connector (4).

## Description

The invention relates to a fishing rod comprising:
- one or more hollow fishing rod tubes, which can be mutually connected at their ends and/or which are telescopingly constructed,
- an elastic thread which is interiorly extending in one or more hollow fishing rod tubes,
- a line connector which is interconnected to the elastic thread and which, in the use position during fishing, is positioned adjacent to, and is supported upon, the front end of the fishing rod,
- a fishing line which is connected to the line connector.

Such a fishing rod is known from the Dutch patent no. 1 005 317, where the elastic thread is releasable fixed onto the inside of the fishing rod tube by means of a conical connector. The fishing line itself is connected to this elastic thread by means of a line connector. Because a major portion of the forces are transferred to the elastic thread and absorbed by means of the elastic stretching of this thread, a relatively thin line can be used to catch heavy fish.
This well-known system, however, has a number of disadvantages.
The pressure of the conical connector or stopper on the inner wall of the fishing rod tube can become so high, for example due to having a lively heavy fish on the fishing line, that the thin wall of the fishing rod tube can burst or even shatter. As the elastic thread soon loses its elasticity and stretches irreversibly, the thread must regularly be re-set with the right tension. In order to do that, the stopper has to be removed from the inside of the fishing rod. Furthermore, this system also has the disadvantage that no adjustments can be made during fishing. When a heavy fish is caught on the hook, the elastic thread will stretch so much that the angler will not be able to swing the fish on the hook into a fishing net, and he will have to move away from the water to allow an assistant to net the fish. Finally, replacing the elastic thread is very time consuming and cannot be carried out easily at the fishing pitch.

It is therefore the object of the invention to provide for a fishing rod onto which an elastic thread can easily be attached and pre-tensioned, thus preventing the bursting or breaking of the rod tube by a stopper, and making it easy for an angler to net the fish on the hook without assistance.
This objective is achieved by the invention by providing the outer wall of one or more fishing rod tubes of the fishing rod with:
- openings for guiding through the elastic thread,
- attachment means for attaching the elastic thread,
whereby, in the use position during fishing, the elastic thread is pre-tensioned between the attachment means and the line connector.
As it is now easy to release and then again secure the elastic thread on the outside wall, it becomes possible to adjust the thread during fishing. The thread can easily be replaced and whilst fishing it is also easy, by taking the line in, to compensate for the stretching of the elastic thread, making it possible to net the fish on the hook without the need for assistance.

In an advantageous embodiment, the fishing rod tube is provided with two openings adjacent to an attachment means.
In a preferred embodiment the first opening is provided on the fishing line side of the attachment means, and the second opening is provided on the handgrip side. In this way, the user may choose how the elastic thread is optimally attached and/or tightened and/or secured.

In an advantageous embodiment the attachment means is selected from the list: (halyard) cleat or overlay cleat, jam cleat or gooseneck cleat, curry cleat or clam cleat.
Particularly the attachment means is a lightweight jam cleat, whereby the material is chosen from the list: metal or synthetic material and preferably carbon-fibre reinforced synthetic material. These attachment means are lightweight and may be easily attached to a carbon-fibre reinforced synthetic fishing rod tub.

Particularly the jam cleat is made of an essentially flat elongated plate, which is attached lengthwise to the outside of the rod tube with a circumferencial clamping ring. This simple construction has proven to be very lightweight and at the same time sturdy enough for securing and clamping the elastic thread.

Preferably at the position of the opening and/or attachment means the fishing rod tubes are provided with a reinforced or strengthened zone, such as a partial or complete thickening of the circumference and/or strengthening ribs.
This prevents the fishing rod tube from splitting or breaking at the position of openings and/or attachment means.

More preferably the opening is provided with an insert element such as a flange ring for guiding and protection of the elastic thread.
Particularly the material of the insert element is chosen from: metal, ceramic, synthetic material, and preferably a wear-resistant synthetic or ceramic material.

Furthermore, the invention relates to a method for assembling the fishing rod into its use position.
The method therefore comprises the following steps:
- inserting the first end of the elastic thread through the front end of the fishing rod into the interior of the hollow fishing rod tube;
- guiding the elastic thread through an opening from the interior to the outside surface of the hollow fishing rod tube ;
- adjusting the tension of the elastic thread by supporting the second end with the attached line connector against the front end and subsequently tensioning the elastic thread;
- securing the elastic thread to the attachment means having an adjusted required tension.

The invention will be further explained by means of a drawing of an embodiment of the fishing rod, which will elucidate its characteristics and other advantages.
Fig. 1 shows in cross-sectional view the fishing rod in accordance with the invention;
Fig. 2A shows in more detail in cross-sectional view the part of the fishing rod tube provided with an opening and an attachment means;
Fig. 2B shows in a top view in more detail, the part of the fishing rod tube from Fig. 2A.

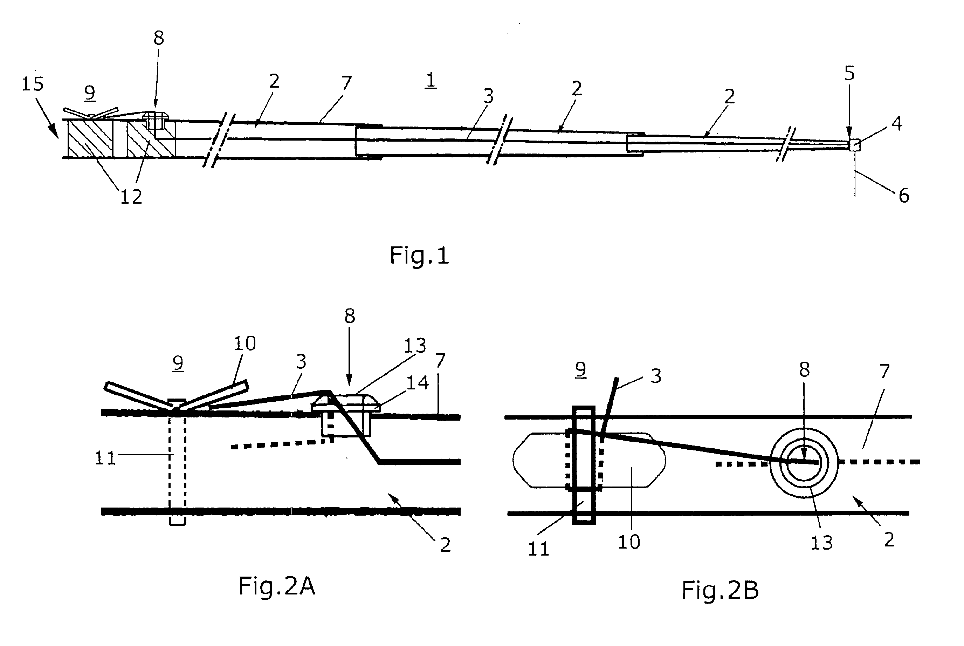

Fig.1 shows in cross-sectional view the fishing rod 1 according to the invention comprising three hollow fishing rod tubes 2 and an interiorly in the fishing rod tubes 2 provided elastic thread 3. This elastic thread 3 is used particularly in so-called fixed fishing rods with lengths of up to 16 metres. For manageability and transportability, these fishing rods are often constructed from hollow fishing rod tubes of 1 - 2 metres length, made from lightweight carbon-fibre reinforced synthetic material.
The slightly tapered fishing rod tubes 2 are slid into each other in order to form a long fixed fishing rod. The tubes 2 can also be produced in a telescopic form. On the front end 5 of the fishing rod 1, the elastic thread 5 is extending outside the smallest fishing rod tube and is interconnected with a line connector 4. A fishing line 6 is attached to this line connector 4. The other end of the elastic thread 3 is guided through an opening 8 in a fishing rod tube and secured to an attachment means 9 on the outside wall 7 of the fishing rod.

Fig. 2A shows in more detail a part of the fishing rod tube comprising an opening 8 and an attachment means 9. The attachment means 9 in this example is a jam cleat 9 made of an elongated plate 10 fixed to the outside wall 7 of the rod tube 2 with a circumferential clamping ring 11. As the attachment means 9 is made of the same carbon-fibre reinforced synthetic material as the hollow fishing rod tube, this construction will hardly increase the weight of the fishing rod 1. Other constructions and materials for the attachment means are possible, but these will be, in general, heavier in weight, which is undesirable. As alternative attachment means, a cam cleat or overlay cleat, a curry clip, or any alternative version of a rope clip known to the expert, can be used. The jam cleat 9 can be fixed to the handgrip side 15 of the opening 8, but positioning it on the fishing line side 5 of the fishing rod has the advantage that the elastic thread is easier to manage, as in order to tighten or stress the line, the angler can pull the thread towards him, when the line is wound around a clamp part.
The opening 8 can be provided with an insert element 13 for guiding the thread 3 through the opening 8. If the fishing rod tube wall 2 is very thin, there is a risk that the edge of the opening 8 will cut through the elastic thread 3. The insert element can be made of metal, synthetic material, carbon-fibre, or ceramic. Ceramic has the advantage that it does not wear or roughen. As shown in Fig. 2A, the insert element may be provided with a flange ring 14 supported upon the outside wall 7 of the fishing rod tube 2.
The part of the fishing rod tube 2 provided with attachment means and openings may be provided with a reinforced or strengthened zone 12 to prevent the thin walls of the fishing rod tubes splitting or shattering due to the forces imposed by the elastic thread on the opening 8, insert element 13, and/or the attachment means. These zones 12 are preferably constructed with a partial or complete thickening of the circumference, and/or strengthening ribs.

Fig. 2B shows a top view of the detailed view of Fig. 2A, whereby the elastic thread 3 is wound around the jam cleat 9 and secured. When the fishing line is attached to the right hand side of the fishing rod tube, the thread will pass through the opening more or less in a straight line having two bends of less than 90°. When the fishing line is attached to the left hand side of the fishing rod tube 2, the elastic thread 3 will make an angle of 90° twice, on both the upper and lower sides of the insert element 13 so that the thread will be slightly gripped on the insert element (see the broken lines in Fig2A and 2B). Preferably, two openings will be provided close to the attachment means; one opening on the fishing line side of the fishing rod, and one opening on the grip side of the fishing rod, such that the user can choose by which method he will guide the elastic thread through and fasten it.

In order to make the fishing rod ready for fishing in accordance with the invention, the elastic thread 3 must firstly be inserted into the inside of the fishing rod tubes. To do this, one end of the elastic thread 3 can, for example, be inserted into the front end 5 and then pulled through the chosen opening 8. In order to pre-tension the elastic thread 3, the line connector 4 should be fixed to the other end of the elastic thread 3. This line connector 4 is provided with such dimensions that it cannot be pulled through the front end 5 into the interior of the hollow fishing rod tube 2, but will be supported by this front end 5. In this way, the elastic thread can be pre-tensioned by pulling the first end of the elastic thread 3 tightly through the opening and then securing it on the attachment means 9.
It is stated that other equivalent ways, known to a skilled person, of positioning the openings and the attachment means on the fishing rod tube (e.g. radially opposite each other etc.) are falling within the scope invention described here.

## Claims

1. Fishing rod (1) comprising
- one or more hollow fishing rod tubes (2) which can be mutually connected at their ends and/or which are telescopingly constructed,
- an elastic thread (3) which is interiorly extending in one or more hollow fishing rod tubes (2),
- a line connector (4), which is interconnected to the elastic thread (3) and which in the use position during fishing is positioned adjacent to, and is supported upon, the front end (5) of the fishing rod (1),
- a fishing line (6) which is connected to the line connector (4),
**characterised in that** the outer wall (7) of one or more fishing rod tubes (2) of the fishing rod (1) is provided with
- openings (8) for guiding through the elastic thread (3),
- attachment means (9) for attaching the elastic thread (3),
and whereby, in the use position during fishing, the elastic thread (3) is pre-tensioned between the attachment means (9) and the line connector (4).

2. Fishing rod, according to claim 1, **characterised in that** the fishing rod tube (2) is provided with two openings adjacent to an attachment means (9).

3. Fishing rod, according to claim 2 **characterised in that** the first opening is provided on the fishing line side of the attachment means, and the second opening is provided on the handgrip side.

4. Fishing rod, according to anyone of the preceding claims 1 - 3, **characterised in that** the attachment means (9) is selected from the list: (halyard) cleat or overlay cleat, jam cleat or gooseneck cleat, curry cleat or clam cleat.

5. Fishing rod, according to claim 4 **characterised in that** the attachment means (9) is a lightweight jam cleat, whereby the material is chosen from the list: metal or synthetic material and preferably carbon-fibre reinforced synthetic material.

6. Fishing rod, according to claim 5, **characterised in that** the jam cleat (9) is made of an essentially flat elongated plate (10), which is attached lengthwise to the outside of the fishing rod tube (2) by means of a circumferential clamping ring (11).

7. Fishing rod, according to anyone of the preceding claims 1 - 6, **characterised in that** at the position of the opening (8) and/or attachment means (9), the fishing rod tubes (2) are provided with a reinforced or strengthened zone (12), such as a partial or complete thickening of the circumference and/or strengthening ribs.

8. Fishing rod, according to claims 1 - 7, **characterised in that** the opening (8) is provided with an insert element (13) such as a flange ring for guiding and protection of the elastic thread (3).

9. Fishing rod, according to claim 8, **characterised in that** the material of the insert element (13) is chosen from the series: metal, ceramic, synthetic material, and preferably a wear-resistant synthetic or ceramic material.

10. Method for assembling the fishing rod (10) into its use position according to anyone of the preceding claims 1 - 9, comprises the following steps:
- inserting the first end of the elastic thread (3) through the front end (5) of the fishing rod into the interior of the hollow fishing rod tube (2);
- guiding the elastic thread (3) through an opening (8) from the interior to the outside surface (7) of the hollow fishing rod tube;
- adjusting the tension of the elastic thread (3) by supporting the second end with the attached line connector (4) against the front end (5) and subsequently tensioning the elastic thread (3);
- securing the elastic thread (3) to the attachment device (9) having an adjusted required tension.
